# EUROPÄISCHE PATENTSCHRIFT

(11) **EP 1 542 504 B1**
(45) Veröffentlichungstag und Bekanntmachung des Hinweises auf die Patenterteilung: **09.08.2006**
(21) Anmeldenummer: 03293165.1
(22) Anmeldetag: 12.12.2003
(51) Int. Cl.: H05B 1/02, B60H 1/00, B60H 1/22

(54) **Elektrische Heizeinrichtung für ein Kraftfahrzeug**
Electric heating device for a vehicle
Dispositif de chauffage électrique pour un véhicule

(43) Veröffentlichungstag der Anmeldung: 15.06.2005
(73) Patentinhaber: Behr France Rouffach SAS, 68250 Rouffach (FR)
(72) Erfinder: Brun, Michel, 68740 Rustenhart (FR); Delamarche, Jean-Luc, 68520 Burnhaupt le bas (FR); Mougey, Mathieu, 68190 Ensisheim (FR)
(74) Vertreter: Grauel, Andreas

(56) Entgegenhaltungen:
- DE-A- 19 911 547
- DE-A- 19 957 452
- DE-C- 10 125 591
- US-A- 5 835 873

## Beschreibung

Die Erfindung betrifft eine elektrische Heizeinrichtung für ein Kraftfahrzeug gemäß dem Oberbegriff des Anspruchs 1, und eine Kraftfahrzeug-Klimaanlage gemäß dem Oberbegriff des Anspruchs 11.

Aus der DE 199 11 547 A1 ist eine elektrische Heizeinrichtung für ein Kraftfahrzeug bekannt, mit einem aus mehreren, parallel angeordneten und PTC-Elemente aufweisenden Heizelementen und aus Wellrippen, die an den Heizelementen in wärmeleitender Verbindung anliegenden, gebildetem Heizblock, der über wenigstens ein Federelement verspannt in einem Rahmen gehalten ist.

Eine weitere elektrische Heizeinrichtung für ein Kraftfahrzeug ist aus der DE 199 57 452 A1 bekannt. Diese weist mehrere Heizelemente, die zu einem Heizblock zusammengesetzt sind, der in einem Rahmen gehalten und von einem zu erwärmenden Medium durchströmbar ist, sowie eine Steuervorrichtung mit mehreren zu kühlenden, neben oder innerhalb des Heizblocks in einer Reihe angeordneten Steuerkomponenten zur Ansteuerung der Heizelemente auf. Dabei ist den zu kühlenden Steuerkomponenten eine gemeinsame, sich entlang der Steuerkomponentenreihe erstreckende Kühlwellrippe in wärmeleitender Verbindung zugeordnet und/oder sie sind mit einem heizstromführenden Anschluss elektrisch an einen Verbindungsleiterstreifen angeschlossen, der mit einer sich senkrecht dazu längs eines Blockseitenbereiches erstreckenden Kontaktleiste verbunden ist, an welche die Heizelemente gemeinsam angeschlossen sind.

Derartige Heizeinrichtungen lassen jedoch insbesondere in Hinblick auf ihre Sicherheit im Crashfall noch Wünsche offen.

Es ist Aufgabe der Erfindung, eine verbesserte Heizeinrichtung zur Verfügung zu stellen.

Diese Aufgabe wird gelöst durch eine elektrische Heizeinrichtung mit den Merkmalen des Anspruchs 1. Vorteilhafte Ausgestaltungen sind Gegenstand der Unteransprüche.

Erfindungsgemäß ist eine elektrische Heizeinrichtung vorgesehen, mit mindestens einem elektrischen Heizelement und einer Steuervorrichtung, wobei eine Notabschaltung für den Crashfall vorgesehen ist, so dass ein elektrischer Kurzschluss in der elektrischen Heizeinrichtung oder ein Brand in Folge einer unerwünschten und übermäßigen Erwärmung im Crashfall sicher vermieden werden kann.

Bevorzugt wird die Notabschaltung durch einen automatisch im Crashfall ausgelösten Schalter gebildet. Die Notabschaltung kann von Hand oder über die Steuervorrichtung elektronisch rücksetzbar sein, so dass sie mehrfach verwendet werden kann, jedoch ist prinzipiell auch eine nichtrücksetzbare Ausführung der Notabschaltung möglich, so dass sichergestellt wird, dass ein Austausch erfolgt und die neue Notabschaltung in einem weiteren Crashfall uneingeschränkt funktionsfähig ist.

Die elektrische Heizeinrichtung weist vorzugsweise mindestens ein PTC-Element auf, bevorzugt jedoch mehrere PTC-Elemente, welche die einzelnen Heizelemente bilden..

Der Schalter der Notabschaltung kann sowohl im Bereich des Heizelements als auch im Bereich der Steuervorrichtung, beabstandet vom Heizelement, angeordnet sein.

Die Notabschaltung umfasst bevorzugt einen integrierten Sensor, der eine automatische Auslösung des Schalters der Notabschaltung im Crashfall bewirkt, wobei der Sensor direkt in den Schalter integriert ausgebildet sein kann, beispielsweise durch im Falle einer im Crashfall auftretenden Beschleunigung. Dabei weist der Sensor mindestens ein bewegliches Element auf, das durch die im Crashfall auftretende Beschleunigung relativ zum restlichen Schalter bewegt wird.

Ebenso kann für die Notabschaltung ein zentraler Sensor vorgesehen sein, der auch andere Steuerungseinrichtungen für Sicherheitskomponenten des Kraftfahrzeugs verbunden ist, die im Crashfall die Sicherheitskomponenten aktivieren.

Im Folgenden wird die Erfindung anhand zweier Ausführungsbeispiele unter Bezugnahme auf die Zeichnung im Einzelnen erläutert. In der Zeichnung zeigen:
- Fig. 1: eine schematisierte Schaltung eines PTC-Zuheizers gemäß dem ersten Ausführungsbeispiel, und
- Fig. 2: eine schematisierte Schaltung eines PTC-Zuheizers gemäß dem zweiten Ausführungsbeispiel.

Eine elektrische Heizeinrichtung 1 einer Kraftfahrzeug-Klimaanlage, welche als Zuheizer verwendet wird, weist einen elektrischen Schaltkreis 2 mit einer Mehrzahl von PTC-Elementen 3, welche zur Umwandlung von elektrischer Energie in Wärme dienen, und eine Steuereinrichtung 4 auf, welche bei dem vorliegenden Ausführungsbeispiel nur die Zustände "EIN" und "AUS" kennt, wobei die PTC-Elemente 3 einzeln über entsprechende Relais 5 ansteuerbar sind. Die Steuersignale können von der Steuereinrichtung 4 beispielsweise über einen Fahrzeugbus, wie den CAN-Bus oder LIN-Bus, an die Relais 5 übertragen werden.

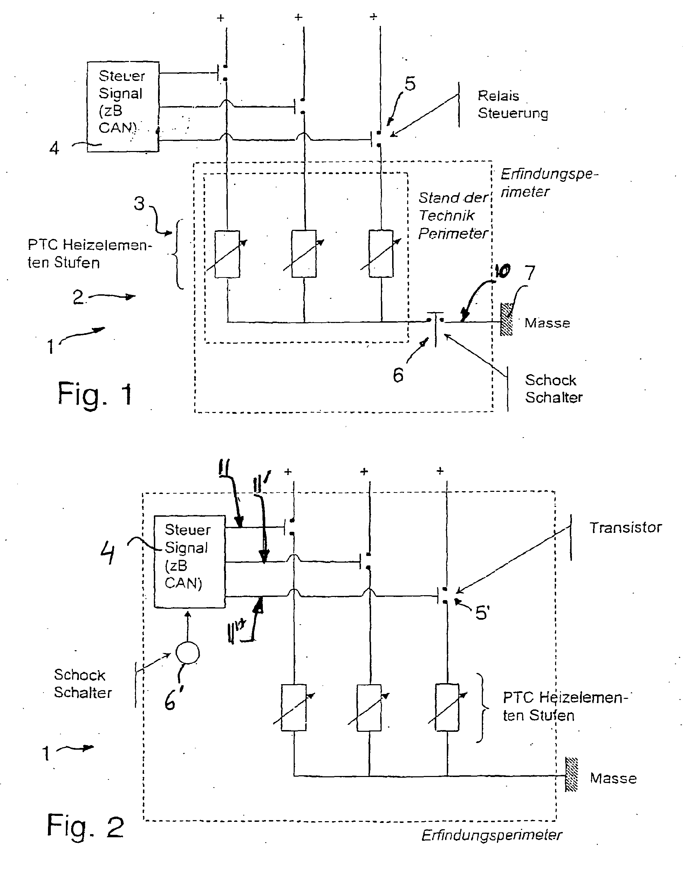

Um sicher zu stellen, dass in einem Crashfall die elektrische Heizung ausgeschaltet ist, ist eine Notabschaltung mittels eines Schalters 6 vorgesehen. Dieser Schalter 6 unterbricht den Schaltkreis 2, und damit das Leistungssignal 10, zwischen den PTC-Elementen 3 und der allen PTC-Elementen 3 gemeinsamen Masse 7 (siehe Fig. 1). Dabei ist der Schalter 6 unabhängig von der Steuereinrichtung 4, so dass die Notabschaltung eine zweite Steuereinrichtung im Schaltkreis 2 bildet. Gemäß dem ersten Ausführungsbeispiel weist der Schalter 6 Komponenten auf, welche durch die im Crashfall auftretenden Beschleunigungen bewegt werden, was die Schaltkreis-Unterbrechung bewirkt. Dabei ist der Schalter derart ausgebildet, dass er nur einmal betätigbar ist und dann ausgetauscht werden muss. Es kann jedoch auch ein mehrfach betätigbarer Schalter verwendet werden, der beispielsweise von Hand zurückgesetzt werden kann.

Gemäß dem in Fig. 2 dargestellten zweiten Ausführungsbeispiel ist die Notabschaltung in die Steuereinrichtung 4 integriert. Bei den PTC-Elementen 3 handelt es sich um PTC-Elemente, die einen Regler umfassen, so dass anstelle der Relais 5 für die einzelnen PTC-Elemente 3 Transistoren 5' vorgesehen sind, welche von der Steuereinrichtung 4 über Steuersignale 11, 11', 11" gesteuert werden. Der Schalter 6' für die Notabschaltung ist vorliegend direkt in der Leiter-Platine des Reglers integriert, so dass die Notabschaltung gemäß dem zweiten Ausführungsbeispiel kostengünstiger hergestellt werden kann als die des ersten Ausführungsbeispiels, jedoch ist der weitere Aufbau der elektrischen Heizeinrichtung 1 gemäß dem ersten Ausführungsbeispiel deutlich einfacher und kostengünstiger. Der Schalter 6' unterbricht im Gegensatz zum Schalter 6 aus Fig. 1 das Leistungssignal 10 nicht direkt, sondem der Schalter 6' unterbricht bzw. blockiert die Steuersignale 11, 11' und 11 ", so dass die Transistoren 5' einen sperrenden Zustand einnehmen und kein Strom mehr durch die PTC-Elemente 3 fließt.

Durch die Notabschaltung kann im Crashfall sichergestellt werden, dass die elektrische Heizeinrichtung ausgeschaltet ist. So werden das Risiko eines Kurzschlusses im Schaltkreis und dadurch das Risiko eines Brandes verringert. Die Anzahl der über eine einzige Notabschaltung zu steuernden PTC-Elemente ist prinzipiell nicht begrenzt.

### Bezugszeichenliste

- 1: elektrische Heizeinrichtung
- 2: Schaltkreis
- 3: PTC-Element
- 4: Steuereinrichtung
- 5: Relais
- 5': Transistor
- 6, 6': Schalter
- 7: Masse
- 10: Leistungssignal
- 11, 11', 11": Steuersignale

## Patentansprüche

1. Elektrische Heizeinrichtung für ein Kraftfahrzeug mit mindestens einem elektrischen Heizelement und einer Steuervorrichtung (4), **dadurch gekennzeichnet, dass** eine Notabschaltung für den Crashfall vorgesehen ist.

2. Elektrische Heizeinrichtung nach Anspruch 1, **dadurch gekennzeichnet, dass** die Notabschaltung ein automatisch im Crashfall ausgelöster Schalter (6, 6') ist.

3. Elektrische Heizeinrichtung nach Anspruch 1 oder 2, **dadurch gekennzeichnet, dass** die Notabschaltung von Hand oder über die Steuervorrichtung elektronisch rücksetzbar ist.

4. Elektrische Heizeinrichtung nach einem der Ansprüche 1 bis 3, **dadurch gekennzeichnet, dass** die elektrische Heizeinrichtung mindestens ein PTC-Element (3) aufweist.

5. Elektrische Heizeinrichtung nach einem der Ansprüche 1 bis 4, **dadurch gekennzeichnet, dass** der Schalter (6) ein Leistungssignal (10) schaltet.

6. Elektrische Heizeinrichtung nach Anspruch 5, **dadurch gekennzeichnet, dass** der Schalter (6) der Notabschaltung im Bereich des Heizelements angeordnet ist.

7. Elektrische Heizeinrichtung nach einem der Ansprüche 1 bis 4, **dadurch gekennzeichnet, dass** der Schalter (6') mindestens ein Steuersignal (11, 11', 11") schaltet.

8. Elektrische Heizeinrichtung nach Anspruch 7, **dadurch gekennzeichnet, dass** der Schalter (6') der Notabschaltung im Bereich der Steuervorrichtung (4) beabstandet vom Heizelement angeordnet ist.

9. Elektrische Heizeinrichtung nach einem der Ansprüche 1 bis 8, **dadurch gekennzeichnet, dass** die Notabschaltung einen integrierten Sensor umfasst, der eine automatische Auslösung der Notabschaltung im Crashfall bewirkt.

10. Elektrische Heizeinrichtung nach einem der Ansprüche 1 bis 8, **dadurch gekennzeichnet, dass** die Notabschaltung durch einen zentralen Sensor auslösbar ist.

11. Kraftfahrzeug-Klimaanlage **gekennzeichnet durch** eine elektrische Heizeinrichtung (1) gemäß einem der Ansprüche 1 bis 10.

## Claims

1. An electric heating device for a motor vehicle having at least one electric heating element and a control device (4),
**characterised in that**
an emergency cut-off is provided in case of a crash.

2. An electric heating device in accordance with claim 1,
**characterised in that**
the emergency cut-off is a switch (6, 6') which is triggered automatically in case of a crash.

3. An electric heating device in accordance with claim 1 or 2,
**characterised in that**
the emergency cut-off can be reset by hand or electronically by the control device.

4. An electric heating device in accordance with one of claims 1 to 3,
**characterised in that**
the electric heating device has at least one PTC (3) element.

5. An electric heating device in accordance with one of claims 1 to 4,
**characterised in that**
the switch (6) sends a power signal (10).

6. An electric heating device in accordance with claim 5,
**characterised in that**
the switch (6) of the emergency cut-off is positioned in the area of the heating element.

7. An electric heating device in accordance with one of claims 1 to 4,
**characterised in that**
the switch (6') sends at least one control signal (11, 11', 11").

8. An electric heating device in accordance with claim 7,
**characterised in that**
the switch (6') of the emergency cut-off is positioned in the area of the control device (4) a certain distance from the heating element.

9. An electric heating device in accordance with one of claims 1 to 8,
**characterised in that**
the emergency cut-off comprises an integrated sensor which automatically triggers the emergency cut-off in case of a crash.

10. An electric heating device in accordance with one of claims 1 to 8,
**characterised in that**
the emergency cut-off can be triggered by a central sensor.

11. An air-conditioning system for a motor vehicle,
**characterised by**
an electric heating device (1) in accordance with one of claims 1 to 10.

## Revendications

1. Dispositif de chauffage électrique pour un véhicule à moteur comportant au moins un élément chauffant électrique et un dispositif de commande (4), **caractérisé en ce qu'**on prévoit une déconnexion d'urgence en cas de choc.

2. Dispositif de chauffage électrique selon la revendication 1, **caractérisé en ce que** la déconnexion d'urgence est un commutateur (6, 6') déclenché automatiquement en cas de choc.

3. Dispositif de chauffage électrique selon la revendication 1 ou 2, **caractérisé en ce que** la déconnexion d'urgence peut être réinitialisée à la main ou électroniquement par l'intermédiaire du dispositif de commande.

4. Dispositif de chauffage électrique selon l'une quelconque des revendications 1 à 3, **caractérisé en ce que** le dispositif de chauffage électrique présente au moins un élément PTC (3).

5. Dispositif de chauffage électrique selon l'une quelconque des revendications 1 à 4, **caractérisé en ce que** le commutateur (6) commute un signal de puissance (10).

6. Dispositif de chauffage électrique selon la revendication 5, **caractérisé en ce que** le commutateur (6) de la déconnexion d'urgence est disposé au niveau de l'élément chauffant.

7. Dispositif de chauffage électrique selon l'une quelconque des revendications 1 à 4, **caractérisé en ce que** le commutateur (6') commute au moins un signal de commande (11, 11', 11").

8. Dispositif de chauffage électrique selon la revendication 7, **caractérisé en ce que** le commutateur (6') de la déconnexion d'urgence est disposé au niveau du dispositif de commande (4) à distance de l'élément chauffant.

9. Dispositif de chauffage électrique selon l'une quelconque des revendications 1 à 8, **caractérisé en ce que** la déconnexion d'urgence comporte un capteur intégré qui provoque un déclenchement automatique de la déconnexion d'urgence en cas de choc.

10. Dispositif de chauffage électrique selon l'une quelconque des revendications 1 à 8, **caractérisé en ce que** la déconnexion d'urgence peut être déclenchée par un capteur central.

11. Système de climatisation pour véhicule à moteur, **caractérisé par** un dispositif de chauffage électrique (1) selon l'une quelconque des revendications 1 à 10.
